# EUROPÄISCHE PATENTSCHRIFT

(11) **EP 1 092 223 B1**
(45) Veröffentlichungstag und Bekanntmachung des Hinweises auf die Patenterteilung: **10.09.2003**
(21) Anmeldenummer: 00927090.1
(22) Anmeldetag: 27.04.2000
(51) Int. Cl.: G21C 19/317

(54) **REKOMBINATOR mit Katalysatorelement**
RECOMBINER having a catalyst element
RECOMBINEUR avec un élément catalytique

(30) Priorität: 28.04.1999 DE 19919268
(43) Veröffentlichungstag der Anmeldung: 18.04.2001
(73) Patentinhaber: Forschungszentrum Jülich GmbH, 52425 Jülich (DE)
(72) Erfinder: BRÖCKERHOFF, Peter, D-52428 Jülich (DE); VON LENSA, Werner, D-52379 Langerwehe (DE); REINECKE, Ernst-Arndt, D-52064 Aachen (DE)
(74) Vertreter: Rox, Thomas Dr.
(86) Internationale Anmeldenummer: EP0003820
(87) Internationale Veröffentlichungsnummer: WO00067262

(56) Entgegenhaltungen:
- EP-A- 0 416 140
- EP-A- 0 416 143
- EP-A- 0 627 260
- US-A- 5 130 079
- US-A- 5 592 521

## Beschreibung

Die Erfindung betrifft einen Rekombinator zum Beseitigen von Wasserstoff mit einem Gehäuse und mit mindestens einem im Gehäuse angeordneten Katalysatorelement, das einen flächigen Grundkörper aufweist, der zumindest teilweise mit einem Katalysatormaterial beschichtet ist, wobei der Grundkörper im Bereich des katalytischen Materials mindestens einen Durchbruch aufweist.

Rekombinatoren weisen katalytisch aktive Katalysatorelemente auf. Mit ihnen wird freigesetzter oder störfallbedingt entstandener Wasserstoff aus nichtinertisierten Räumen, z. B. Sicherheitsbehältern von Druck- und nichtinertisierten Siedewasserreaktoren, die neben Wasserstoff auch Wasserdampf, Luft, Aerosole und weitere Gase enthalten, beseitigt.

Im Verlauf schwerer Störfälle entstehen in wassergekühlten Kernreaktoren (LWR) infolge der Reduktion von Wasser-dampf große Mengen Wasserstoff, die in die Sicherheitsbehälter gelangen. Die maximalen Wasserstoffmengen können sowohl bei Druck- als auch Siedewasserreaktoren etwa 20.000 mₙ³ betragen. Aufgrund des sich in den Sicherheitsbehältern (Containments) befindenden Luftsauerstoffs besteht die Gefahr der Bildung zündfähiger Gemische, deren unkontrollierte Entzündung mit anschließender Detonation eine schwere dynamische Druckbeanspruchung der Containmentwände bewirkt. Wasserdampf- und Wasserstoffentfernung führen darüber hinaus stets zu Druck- und Temperaturerhöhungen der Störfallatmosphäre. Dies ist insbesondere in Siedewasserreaktoren bedeutsam, da die Volumina ihrer Behälter nur etwa 20.000 m³ im Vergleich zu 70.000 m³ bei Druckwasserreaktoren betragen. Druck- und Temperaturerhöhungen führen zu einer zusätzlichen statischen Beanspruchung der Containmentwände. Außerdem besteht bei Leckagen infolge des Überdrucks die Gefahr des Austritts radiotoxischer Substanzen.

Vorbeugende Sicherheitsvorkehrungen bestehen in der Inertisierung der Gasvolumina mit Stickstoff, wie sie im Fall der Siedewasserreaktoren geplant oder auch schon vorgenommen sind. Diskutierte und zum Teil bereits realisierte Gegenmaßnahmen stellen katalytische Rekombinatoren dar. Mit deren Hilfe wird der entstandene Wasserstoff sowohl innerhalb als auch außerhalb der Zündgrenzen exotherm katalytisch rekombiniert, d. h. unter Entstehung von Wärme in Wasserdampf umgesetzt. Wasserstoffgehalte mit Konzentrationen innerhalb der Zündgrenzen lassen sich darüber hinaus auch konventionell nach Fremdzündung abbren-nen. Die dabei auftretenden Vorgänge sind jedoch nicht vollständig kontrollierbar, so daß es unter Umständen zu den bereits oben genannten anlagengefährdenden Reaktionen kommen kann.

Zur Beseitigung des im Normalbetrieb und störfallbedingt entstehenden Wasserstoffs wurden sowohl thermische als auch katalytische Rekombinatoren entwickelt, die den Wasserstoff mit dem Sauerstoff der Luft zu Wasserdampf rekombinieren. Bevorzugt werden katalytische Systeme, die passiv, d. h. selbststartend und ohne externe Energieversorgung, arbeiten, damit die Verfügbarkeit während eines Störfalls gewährleistet ist. Zur Zeit sind aus dem Stand der Technik zwei Rekombinatortypen bekannt, bei denen als Substrate sowohl metallische Platten oder Folien als auch hochporöses Granulat verwendet werden, auf die Platin bzw. Palladium als Katalysator aufgebracht ist. Mehrere Folien und Granulatpakete - das Granulat wird von Drahtnetzen zu Paketen zusammengehalten - sind vertikal und parallel zueinander in Blechgehäusen angeordnet. Das Gemisch aus Wasserstoff und Luft tritt an der Unterseite in die Gehäuse ein. An den katalytisch beschichteten Oberflächen setzt die Reaktion ein. Das Gemisch überströmt die Oberflächen infolge des entstehenden thermischen Auftriebs. Ein Gebläse ist also nicht erforderlich.

Es gilt als gesichert, daß mit einer Anzahl von 40 bis 100 katalytischer Rekombinatoren dem Wasserstoffproblem in Kernreaktoren begegnet werden kann. Sie werden im Sicherheitsbehälter so angeordnet, daß ihre Wärmeabgabe möglichst in derselben Richtung erfolgt wie die beim großen Unfall auftretenden großräumigen Konvektionsbewegungen.

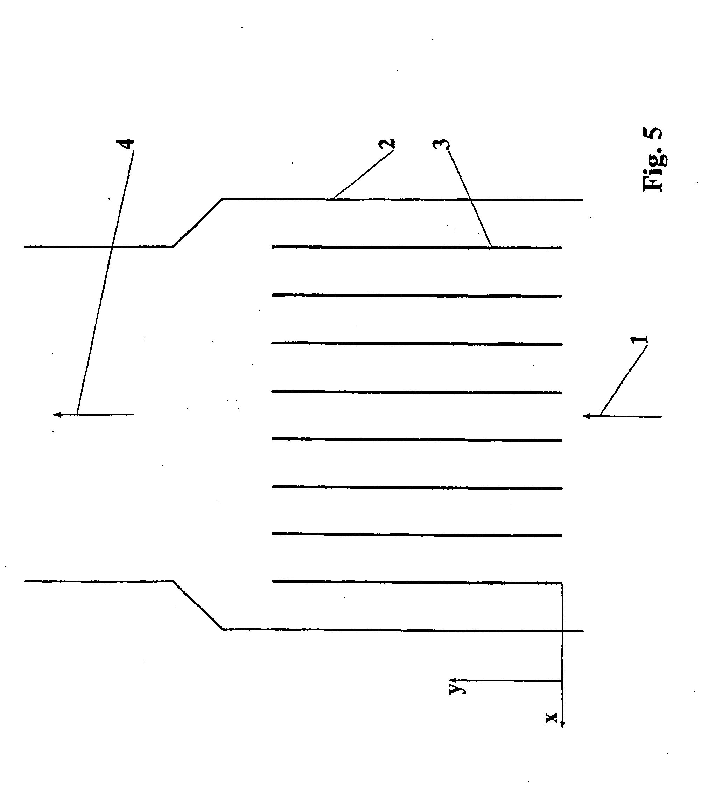

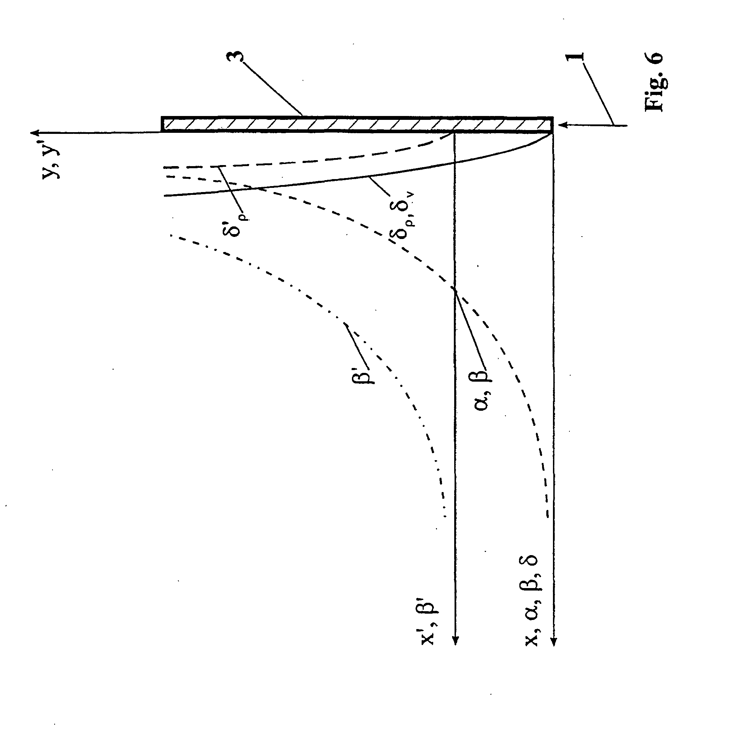

Zur Beschreibung des Funktionsprinzips der oben genannten Abbauvorrichtung diene Fig. 5, die schematisch einen heute üblichen Rekombinator in Seitenansicht darstellt. Beidseitig mit katalytisch wirkenden Materialien, z. B. Platin oder Palladium, beschichtete Grundkörper 3 von Katalysatorenelementen sind parallel zueinander in einem Gehäuse 2 angeordnet sind. Das aus Dampf, Luft, Wasserstoff und Aerosolen bestehende Gemisch steigt aufgrund der Dichteunterschiede - hohe Temperatur des Gemischs und geringe Dichte des Wasserstoffs - nach oben, wie mit dem Pfeil 1 dargestellt ist. Es tritt unten in den Rekombinator ein. An den beschichteten Grundkörpern kommt es zur Reaktion des u.a. aus Wasserstoff und Sauerstoff bestehenden Gemischs, bei der Wärme freigesetzt wird. Das abgereicherte Gemisch verläßt den Rekombinator oben, siehe Pfeil 4. Zur Verdeutlichung der Fig. 6 sind unten die Koordinaten angegeben, die die Strömungsrichtung des Gemischs y und die Richtung x quer dazu bezeichnen.

Fig. 6 gibt die Wärme- und Stofftransportvorgänge an einem Katalysatorelement, das einseitig beschichtet ist, wieder. Eingezeichnet sind neben dem zuvor bereits genannten Koordinatensystem auch die Grenzschichtverläufe δ_{ρ} und δᵥ sowie die Verläufe für die Wärme- und Stoffübergangskoeffizienten α und β. Aus Gründen der Vereinfachung ist jeweils nur ein Verlauf dargestellt. Mit δ_{ρ} wird die Grenzschicht für den Stofftransport, mit δᵥ die für die Geschwindigkeit bezeichnet. Sie werden auch stoffliche und fluiddynamische Grenzschichten genannt.

Am Eintritt, also bei y = 0, ist die Grenzschichtdicke Null, d. h. Stoff- und Wärmeübergangskoeffizienten sind theoretisch unendlich. In Strömungsrichtung nehmen die Dicken der Grenzschichten zu, die Wärme- und Stoffübergangskoeffizienten demzufolge entsprechend ab. Da die Katalysatorelemente eines Rekombinators über die gesamte Fläche beschichtet sind, setzt die Reaktion bereits am Plattenbeginn ein. An dieser Stelle ist also der lokale Wasserstoffumsatz aufgrund extrem großen Stoffübergangs sehr hoch. Die Folge ist eine relativ hohe Reaktionstemperatur, die bei hinreichendem Angebot an Wasserstoff und Sauerstoff zum Erreichen oder Überschreiten der Zündtemperatur führen kann, zumal die Abfuhr der Wärme von der Oberfläche des Katalysatorelements infolge Konvektion nicht ausreicht und das Material des Grundkörpers die freigewordene Reaktionswärme nicht speichern kann. Damit ist eine Deflagration oder sogar Detonation mit der Folge der oben beschriebenen Schädigung nicht ausgeschlossen. Außerdem trägt der weitere beschichtete Bereich für die Umsetzung von Wasserstoff nicht mehr besonders bei, d. h. auf ihn könnte prinzipiell verzichtet werden.

Die Reaktion innerhalb der Rekombinatoren ist diffusionskontrolliert. Das bedeutet, daß der Antransport der Reaktanden an die katalytisch wirkenden Oberflächen sowie der Abtransport der Reaktionsprodukte von den Oberflächen von entscheidender Bedeutung für die Geschwindigkeit des Rekombinationsprozesses sind. Die Katalysatormengen auf den Oberflächen sind dagegen von untergeordneter Bedeutung. Der an die Oberflächen gelangende Wasserstoff wird in allen Fällen auch umgesetzt. Dies läßt den Schluß zu, daß die Auslegung eines Rekombinators zunächst im Hinblick auf die Optimierung der Transportvorgänge, dann aber auch auf die Optimierung der Wärmeabfuhr vorzunehmen ist.

Läßt man den Eintrittsbereich der Grundkörper der Katalysatorelemente unbeschichtet, wie in der deutschen Patentanmeldung 198 52 953.8 offenbart ist, kann sich die fluiddynamische Grenzschicht bis zum Einsetzen der Reaktion bereits ausbilden, so daß der Stoffübergangskoeffizient kleiner als zu Beginn des Grundkörpers ist. Trotz hohen Umsatzes kann auf diese Weise ein Teil der Reaktionswärme im Grundkörper gespeichert und aufgrund axialer Wärmeleitung in den unbeschichteten Bereich des Grundkörpers abgegeben werden. Dies ist in der Fig. 6 ebenfalls angedeutet. Der Stoffübergang beginnt hier an der Stelle y'=0. Die Grenzschicht für den Stofftransport δ_{ρ}' und der Stoffübergangskoeffizient β' sind eingezeichnet.

Stofflicher und fluiddynamischer Anlauf sind also versetzt.

Trotz der großen freien Oberfläche des Rekombinatortyps, der poröses Granulat als Substrat verwendet, ist dessen Wirksamkeit geringer als die des anderen Rekombinatortyps, für den Platten oder Folien benutzt werden. Das Gemisch aus Brenngas und Luft erreicht bei der Überströmung der beschichteten Substrate nicht alle katalytischen Zentren, da die Reaktion lediglich an den Paketoberflächen oder in deren unmittelbarer Nachbarschaft stattfindet. Bei beiden Rekombinatortypen ist die Reaktion unvollständig.

Die Abfuhr der Reaktionswärme aus den Systemen ist grundsätzlich problematisch. Sie erfolgt fast ausschließlich infolge Konvektion von den festen Oberflächen an die vorbeiströmenden Gase sowie Wärmestrahlung an benachbarte Strukturen. Zu große Wasserstoffmengen können zu einer Überhitzung der beschichteten Substrate führen, so daß die Zündtemperatur erreicht oder überschritten wird und es infolgedessen zu homogenen Gasphasenreaktionen mit Deflagration bzw. Detonation kommen kann. Als weiterer Nachteil ist die zusätzliche Aufheizung der Umgebung anzusehen.

Die EP 0 627 260 A1, von der die Erfindung ausgeht, offenbart einen Rekombinator, bei dem unter anderem zylindrische Katalysatorelemente mit unterschiedlichem Durchmesser konzentrisch angeordnet sind. Ein Wasserstoff enthaltendes Gasgemisch strömt parallel zu den Katalysatorelementen entlang deren Oberflächen durch den Rekombinator. Um ein Aufreißen der Grenzschichten und damit eine Erhöhung der Reaktionsrate zu erreichen, sind an den Katalysatorelementen sogenannte Turbulatoren vorgesehen, um Turbulenzen zu erzeugen. Diese sind als Bohrungen in den Katalysatorelementen ausgebildet.

Die EP 0 416 143 A1 offenbart einen Rekombinator, der Katalysatorplatten umfasst, die senkrecht innerhalb der das Wasserstoffgasgemisch enthaltenden Atmosphäre angeordnet sind. Die Katalysatorplatten sind mit Löchern versehen, aufgrund derer es zur Ausbildung von Querströmen und damit insgesamt zu einer räumlichen Konvektion kommt, die vorhandene Sperrschichten auflöst oder solche an der Bildung hindert.

Die EP 0 416 140 A1 offenbart einen schachtförmigen Rekombinator, dessen Wandungen aus doppelseitig beschichteten Katalysatorplatten bestehen. Das Wasserstoffluftgemisch strömt bei diesem Rekombinator sowohl im Inneren als auch entlang der Außenwandung. Der Schacht ist dabei aus übereinander angeordneten Segmenten gebildet, wobei zwischen den einzelnen Segmenten senkrecht zur Strömungsrichtung weitere mit Löchern versehene Katalysatorplatten angeordnet sind.

Bei derartigen Rekombinatoren hat es sich als nachteilig erwiesen, dass der Effekt, der durch die Durchbrüche im Hinblick auf die Reaktionsrate an den Katalysatoroberflächen erzielt wird vergleichsweise gering ist.

Der Erfindung liegt daher das technische Problem zugrunde, die vorhandenen katalytischen Oberflächen trotz geringer Anströmgeschwindigkeiten der Reaktionspartner und der dadurch bedingten Grenzschichten optimal auszunutzen und die Anfälligkeit gegen Ablagerung von Aerosolen in den Rekombinatoreinsätzen gering zu halten.

Das zuvor aufgezeigte Problem wird erfindungsgemäß durch einen Rekombinator nach Anspruch 1 mit einem Gehäuse und mit mindestens einem im Gehäuse angeordneten Katalysatorelement gelöst, das einen flächigen Grundkörper aufweist, der zumindest teilweise mit einem Katalysatormaterial beschichtet ist, wobei der Grundkörper im Bereich des katalytischen Materials mindestens einen Durchbruch aufweist.

Erfindungsgemäß ist der Grundkörper des Katalysatorelementes gekrümmt ausgebildet, und es sind innerhalb des Gehäuses durch den Grundkörper mindestens zwei Kanäle ausgebildet, wobei mindestens ein erster Kanal einen sich verengenden Strömungsquerschnitt und mindestens ein zweiter Kanal einen sich erweiternden Strömungsquerschnitt aufweisen. Durch die unterschiedlichen Strömungsquerschnitte innerhalb der verschiedenen Kanäle werden Druckdifferenzen erzeugt, die durch die Durchbrüche hindurch ausgeglichen werden, um Turbulenzen zu erzeugen und somit die Grenzschichten aufzureißen.

Vorzugsweise weist der erste Kanal in Strömungsrichtung im Eintrittsbereich einen sich verengenden und strömungsabwärts einen sich erweiternden Strömungsquerschnitt auf. Weiterhin weist der zweite Kanal in Strömungsrichtung im Eintrittsbereich einen sich erweiternden und strömungsabwärts einen sich verengenden Strömungsquerschnitt auf. Somit wird während des Durchströmens des Reaktionsgemisches durch den Rekombinator mehrfach eine Druckdifferenz zwischen den beiden Kanälen erzeugt.

In weiter bevorzugter Weise ist eine Mehrzahl von Katalysatorelementen im Gehäuse angeordnet, wobei Katalysatorelemente mit entgegengesetzt ausgerichteten Krümmungen wechselseitig benachbart zueinander angeordnet sind und Kanäle ausbilden, die abwechselnd einen sich verengenden und einen sich erweiternden Strömungsquerschnitt aufweisen. Dadurch wird der gesamte Innenraum des Gehäuses in mehrere Kanäle unterteilt, so daß in vorteilhafter Weise die katalytische Fläche und auch der Anteil der Querströmungen im Verhältnis zur gesamten Strömung vergrößert wird.

Eine weitere bevorzugte Ausgestaltung des Rekombinators besteht darin, daß der Grundkörper im Eintrittsbereich des Rekombinators vollflächig ausgebildet ist und daß die Durchbrüche nur im strömungsabwärts vom Eingangsbereich angeordneten Abschnitt des Katalysatorelements angeordnet sind. Der Vorteil liegt darin, daß sich zunächst die Strömungen entlang der Oberflächen ausbilden können, so daß erst im späteren Verlauf der Überströmung die Verwirbelung aufgrund der Durchbrüche eintritt.

Wie zuvor dargestellt worden ist, weist das Katalysatorelement einen flächigen Grundkörper auf, der zumindest teilweise mit einem Katalysatormaterial beschichtet ist, wobei der Grundkörper im Bereich des katalytischen Materials mindestens einen Durchbruch aufweist. Beim Überströmen des reaktiven Gasgemisches über das Katalysatorelementes wird somit an den Stellen der Durchbrüche eine Querströmung ermöglicht, die zu einem Aufreißen von sich auf den Oberflächen gegebenenfalls ausgebildeten Grenzschichten führt. Dadurch wird die Rekombinationsrate, gemessen über die gesamte Oberfläche des Katalysatorelementes, verbessert, da die Grenzschichten aufgelöst und die Wärme- und Stoftransportvorgänge in größerem Maße stattfinden, als es mit ungestörten Grenzschichten der Fall sein würde.

Dabei arbeiten die Durchbrüche der Katalysatorelemente dann besonders effektiv, wenn auf beiden Seiten des Katalysatorelementes unterschiedliche Drücke vorliegen. Die Druckdifferenz wird dann durch die Durchbrüche ausgeglichen, so daß es an den Stellen der Durchbrüche zu erheblichen Verwirbelungen, also zum Aufreißen der Grenzschichten kommt.

Bei einer weiteren Lehre der vorliegenden Erfindung weist das Katalysatorelement einen flächigen Grundkörper auf, der zumindest teilweise mit einem Katalysatormaterial beschichtet ist, wobei der Grundkörper im Bereich des katalytischen Materials mindestens einen Turbulator aufweist. Als Turbulatoren werden Elemente auf der Oberfläche des Katalysatorelementes bezeichnet, die für eine sich gegebenenfalls entlang der Oberfläche ausgebildete Grenzschicht ein Strömungshindernis darstellt und beim Überströmen zu einer Verwirbelung, also zu einer Ausbildung von Turbulenzen führt. Dadurch wird die Grenzschicht zumindest teilweise aufgelöst, so daß die Wärme- und Stoftransportvorgänge in größerem Maße stattfinden, als es mit ungestörten Grenzschichten der Fall sein würde.

In bevorzugter Weise ist der Turbulator als im wesentlichen quer zur Überströmungsrichtung ausgerichteter Grenzschichtzaun ausgebildet, der beispielsweise in Form eines auf der Oberfläche des Katalysatorelementes befestigten Drahtes oder als Rippe ausgebildet sein kann. Weiterhin kann der Turbulator als eine Oberflächenrauhigkeit ausgebildet sein. Als Oberflächenrauhigkeit ist eine zumindet teilweise nicht eben ausgebildete Oberfläche zu verstehen. Deren Erhebungen und Vertiefungen sind regelmäßig oder unregelmäßig verteilt angeordnet. Beim Überströmen führt die Oberflächenrauhigkeit zu Verwirbelungen der Reaktionsgemisches und somit zu einem Aufreißen der Grenzschicht.

Mit den zuvor dargestellten Ausgestaltungen der Oberflächen der Katalysatorelementen sowie des Aufbaus des Rekombinators wird neben der Verbesserung des Stofftransportes durch das Aufreißen der Grenzschichten auch die Ablagerung von Aerosolen an den Oberflächen verringert. Eine sauberere und vollständigere Umsetzung des Wasserstoffes ist die Folge.

Im folgenden wird die Erfindung anhand von Ausführungsbeispielen näher erläutert, wobei auf die Zeichnung bezug genommen wird. In der Zeichnung zeigen
- Fig. 1: ein Katlysatorelement mit Durchbrüchen in einer Draufsicht,
- Fig. 2: einen nicht erfindungsgemäßen Rekombinator mit schräg zur Durchströmung ausgerichteten Katalysatorelementen gemäß Fig. 1 im Querschnitt,
- Fig. 3: einen erfindungsgemäßen Rekombinator mit Katalysatorelementen, die gekrümmte Oberflächen aufweisen und Strömungskanäle mit abwechselnd ausgerichtenen Krümungsverläufen bilden, im Querschnitt,
- Fig. 4: die Katalysatorelemente gemäß Fig. 3 in einer Detailansicht, wobei die Strömungsverhältnisse und die sich einstellenden Drücke dargestellt sind,
- Fig. 5: einen aus dem Stand der Technik bekannten Rekombinator im Querschnitt und
- Fig. 6: eine graphische Darstellung, in der die Verläufe von Grenzschichten und der Wärme- und Stofftransportkoeffizienten dargestellt sind.

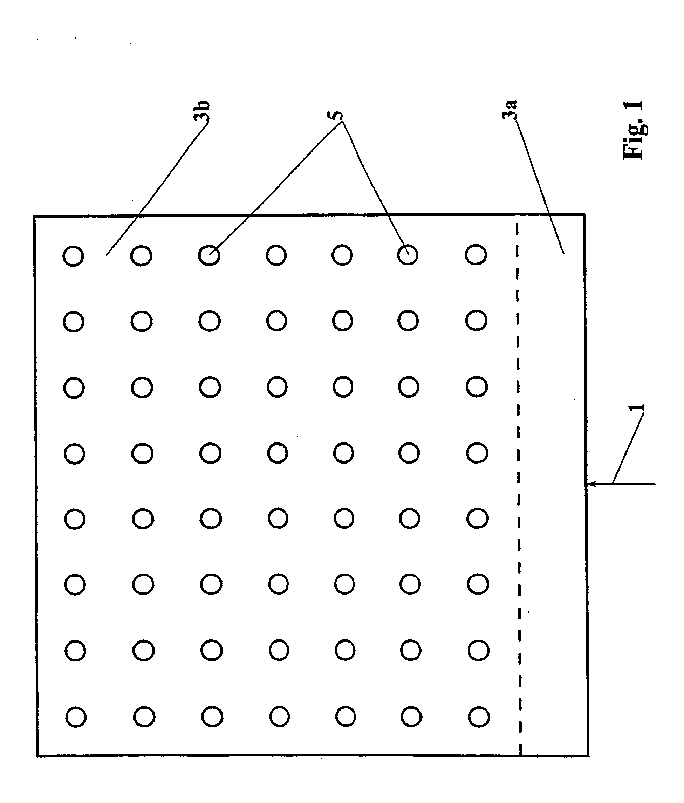

Fig. 1 zeigt einen Grundkörper 3 eines Katalysatorelementes, der von unten mit wasserstoffreichem Gas 1 angeströmt wird. Der Eintrittsbereich 3a des als Platte oder Folie ausgebildeten Grundkörpers 3 ist vorzugsweise unbeschichtet. Der beschichtete Teil ist mit 3b bezeichnet. Der Grundkörper 3 ist mit Durchbrüchen 5 - dargestellt sind Bohrungen - versehen. Es sind auch andere Formen von Durchbrüchen 5 möglich. Zahl, Anordnung und Größe der Durchbrüche 5 können variieren. Sie sind den jeweiligen Anforderungen anzupassen. Die Durchbrüche 5 bieten den Vorteil, daß ein Queraustausch der Strömung über die als Ausgleichsöffnung wirkenden Durchbrüche 5 möglich ist. Bei bestehenden Rekombinatortypen ist dies wegen fehlender Öffnungen oder Durchbrüche nicht möglich. Der Austausch führt zu einer schrägen Anströmung der Kanten der Durchbrüche 5 und damit zu einem verbesserten Stoffübergang sowie zum Abwaschen von Aerosolen.

Bei fehlendem Queraustausch kann gemäß einer weiteren Lehre, die nicht in der Zeichnung dargestellt ist, eine Verwirbelung mittels Turbulatoren, also Oberflächenrauhigkeiten oder Grenzschichtzäunen, zu einer Erhöhung der Wasserstoffumsätze führen, da die sich bis zu diesen Stellen ausgebildete Grenzschicht aufgerissen wird und der stoffliche Anlauf strömungsabwärts erneut beginnt. Auf diese Weise wird der beschichtete Bereich gezielt für die Wasserstoffumsetzung genutzt. Zur Erhöhung der Umsätze im beschichteten Bereich kann also die Oberfläche des nicht mit Durchbrüchen versehenen Bereichs, wie oben bereits gesagt, aufgerauht oder mit anderen die Grenzschicht beeinflussenden Oberflächenstrukturen versehen werden.

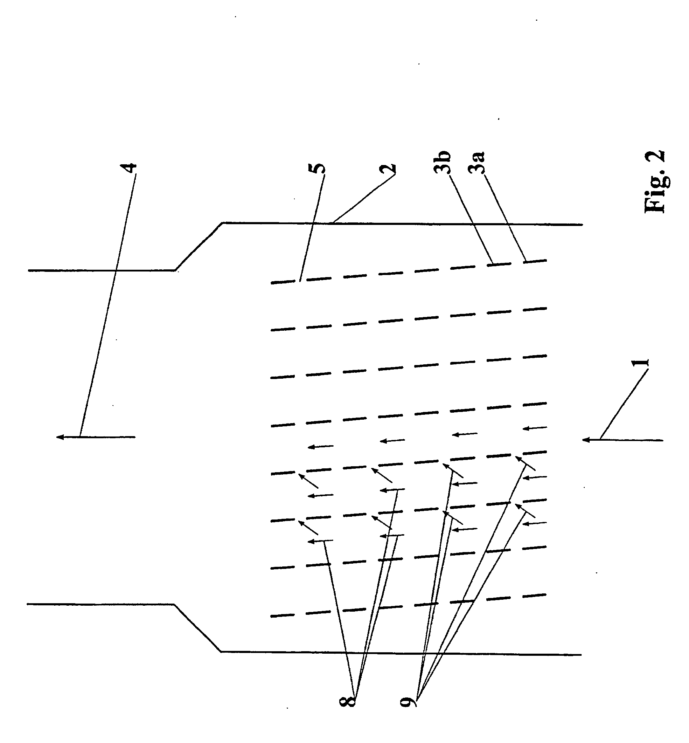

In Fig. 2 ist eine Anwendung der in Fig. 1 gezeigten Grundkörper 3 in einem Rekombinator dargestellt. Das Gemisch tritt - siehe Pfeil 1 - unten in das Gehäuse 2 des Rekombinators ein. Die Grundkörper 3 sind zur Erzeugung von Druckdifferenzen zwischen den Ober- und Unterseiten schräg im Gehäuse 2 angeordnet. Sie weisen ebenfalls unbeschichtete Bereiche 3a und beschichtete Bereiche 3b auf. Die beschichteten Bereiche 3b sind mit Durchbrüchen 5 versehen. Als Grenzfall können auch katalytisch beschichtete Netze mit angepaßter Netzweite zur Beeinflussung des Strömungswiderstandes verwendet werden. Infolge der Schrägstellung kommt es in den Zonen zwischen den Grundkörpern 3 sowohl zu aufwärts gerichteten Schrägströmungen 8 als auch zu Querströmungen 9. Die Querströmungen 9 führen infolge von Verwirbelungen sowohl zur verbesserten Umsetzung des Wasserstoffs als auch zum Abwaschen von Aerosolen, die bei orthogonal durchströmten Katalysatorelementen, wie z. B. Netzen, auch zu Verstopfungen führen können. Das abgereicherte Gemisch verläßt die Vorrichtung oben, wie mit dem Pfeil 4 dargestellt ist.

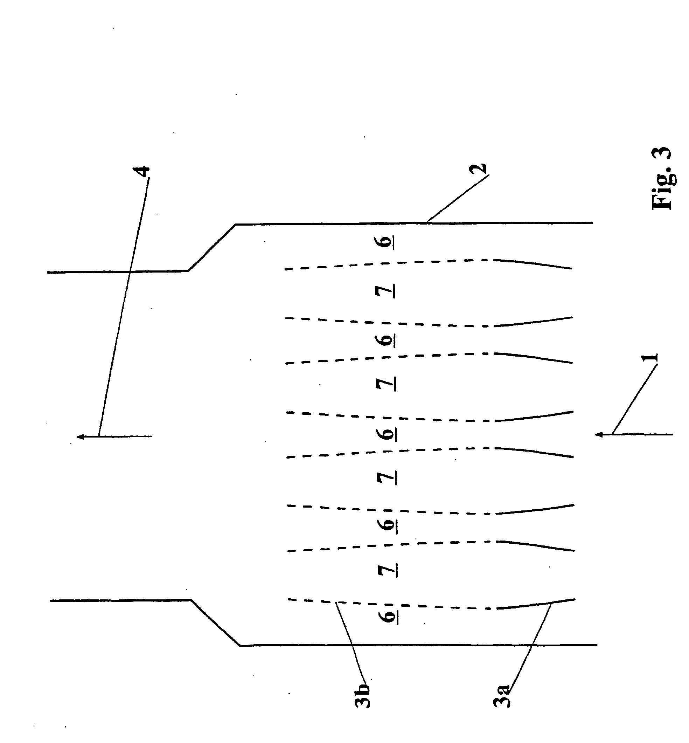

Fig. 3 zeigt eine Möglichkeit der Gestaltung der Grundkörper 3 gemäß der Erfindung. In dieser Darstellung sind die Grundkörper 3 über die Höhe wie Tragflächen eines Flugzeugs gekrümmt. Das Gemisch (Pfeil 1) strömt unten in den Rekombinator ein und verteilt sich auf verschiedene Kanäle 6 und 7. Der Eingangsbereich 3a der Grundkörper 3 ist wie zuvor unbeschichtet. Aufgrund der Krümmungen kommt es in den entstehenden Kanälen 6 und 7 entweder zu einer Beschleunigung oder Verzögerung der Strömung. Die Reaktion setzt im beschichteten Bereich 3b ein. Dort kann es wegen der Durchbrüche 5 zu dem Queraustausch kommen.

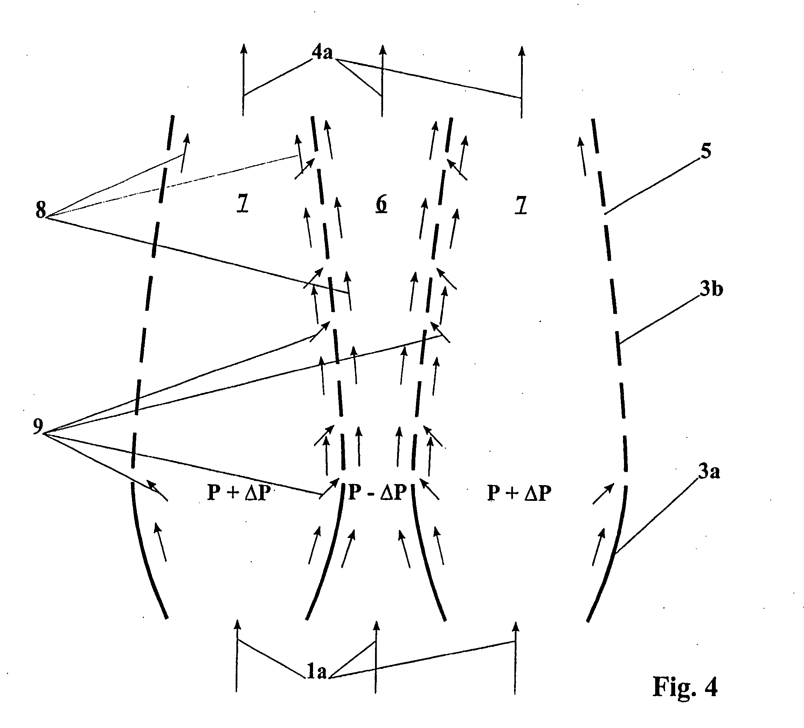

In Fig. 4 sind die Verhältnisse deutlicher dargestellt. Das wasserstoffreiche Gemisch verteilt sich (siehe Pfeil la) entsprechend den sich einstellenden Strömungsdruckverlusten auf die einzelnen Strömungskanäle 6 und 7. Bei nur einem Grundkörper 3 würden sich wie bei einem Tragflügel an Ober- und Unterseite des Substrates entsprechend der unterschiedlichen Umströmungsgeschwindigkeiten unterschiedliche Drücke einstellen, die bei einem Tragflügel zum Auftrieb führen. Im vorliegenden Fall allerdings weisen benachbarte Grundkörper 3 stets eine entgegengesetzte Krümmung auf. Infolgedessen kommt es in den sich verengenden Kanälen 6, wie z. B. in einer Düse, zu einer Beschleunigung der Strömung. Die Erweiterungen in den Nachbarkanälen 7 dagegen führen zu einer Verzögerung. Beschleunigungen bzw. Verzögerungen bewirken in den Kanälen 6 bzw. 7 die Drücke P+ΔP bzw. P-ΔP. Diese Druckdifferenzen zwischen Nachbarkanälen 6 und 7 führen zu einem Queraustausch innerhalb der Strömung. Der Austausch erfolgt wieder über die Durchbrüche 5, die als Bohrungen oder als netzartige Einsätze im Material des Grundkörpers ausgebildet sind. Aufgrund dieser möglichen Querströmungen herrscht in den in Strömungsrichtung vom Eintrittsbereich abgewandten Bereichen benachbarter Kanäle 6 und 7 nahezu derselbe Druck P. Die Aufwärtsströmungen sind wie in Fig. 2 mit 8, die Querströmungen mit 9 bezeichnet. Das wasserstoffarme Gemisch verläßt die einzelnen Kanäle oben, siehe Pfeil 4a.

## Patentansprüche

1. Rekombinator zum Beseitigen von Wasserstoff
- mit einem Gehäuse (2) und
- mit mindestens einem im Gehäuse (2) angeordneten Katalysatorelement, das einen flächigen Grundkörper (3) aufweist, der zumindest teilweise mit einem Katalysatormaterial (3b) beschichtet ist,
- wobei der Grundkörper (3) im Bereich des katalytischen Mäterials (3b) mindestens einen Durchbruch (5) aufweist,
**dadurch gekennzeichnet,**
- **daß** der Grundkörper (3) des Katalysatorelementes gekrümmt ausgebildet ist,
- **daß** innerhalb des Gehäuses (2) durch den Grundkörper (3) mindestens zwei Kanäle (6, 7) ausgebildet sind,
- wobei im beschichteten Bereich mindestens ein erster Kanal (6) einen sich verengenden Strömungsquerschnitt und mindestens ein zweiter Kanal (7) einen sich erweiternden Strömungsquerschnitt aufweisen.

2. Rekombinator nach Anspruch 1, **dadurch gekennzeichnet, daß** der erste Kanal (6) in Strömungsrichtung im Eintrittsbereich einen sich verengenden und strömungsabwärts einen sich erweiternden Strömungsquerschnitt aufweist und daß der zweite Kanal (7) in Strömungsrichtung im Eintrittsbereich einen sich erweiternden und strömungsabwärts einen sich verengenden Strömungsquerschnitt aufweist.

3. Rekombinator nach Anspruch 2, **dadurch gekennzeichnet, daß** eine Mehrzahl von Katalysatorelementen im Gehäuse (2) angeordnet ist, wobei Katalysatorelemente mit entgegengesetzt ausgerichteten Krümmungen wechselseitig benachbart zueinander angeordnet sind und Kanäle (6, 7) ausbilden, die abwechselnd einen sich verengenden und einen sich erweiternden Strömungsquerschnitt aufweisen.

4. Rekombinator nach einem der Ansprüche 1 bis 3, **dadurch gekennzeichnet, daß** der Grundkörper (3) im Eintrittsbereich (3a) des Rekombinators vollflächig ausgebildet ist und daß die Durchbrüche (5) nur im strömungsabwärts vom Eingangsbereich (3a) angeordneten Abschnitt des Katalysatorelements angeordnet sind.

5. Rekombinator nach einem der Ansprüche 1 bis 4, **dadurch gekennzeichnet, daß** der Grundkörper (3) im Bereich des katalytischen Materials (3b) mindestens einen Turbulator aufweist.

6. Rekombinator nach Anspruch 5, **dadurch gekennzeichnet, daß** der Turbulator als Grenzschichtzaun ausgebildet ist, der im wesentlichen quer zur Überströmungsrichtung ausgerichtet ist.

7. Rekombinator nach Anspruch 5, **dadurch gekennzeichnet, daß** der Turbulator als eine Oberflächenrauhigkeit ausgebildet ist.

## Claims

1. A recombiner for the elimination of hydrogen
- comprising a housing (2), and
- at least one catalyst element, arranged in the housing (2), which comprises a sheet-like base element (3) coated at least partially with a catalyst material (3b),
- wherein the base element (3) has at least one opening (5) in the area of the catalytic material (3b),
**characterized in that**
- the base element (3) of the catalyst element has a curved shape,
- inside the housing (2), the base element (3) forms at least two channels (6, 7),
- wherein, in the coated section, at least one channel (6) has a narrowing flow cross-section, and at least one second channel (7) has an expanding flow cross-section.

2. The recombiner according to Claim 1, **characterized in that** the first channel (6) has, in the direction of flow, a narrowing flow cross-section in the area of entry and, downstream, a widening flow cross-section, and that the second channel (7) has, in the direction of flow, a widening flow cross-section in the area of entry and, downstream, a narrowing flow cross-section.

3. The recombiner according to Claim 2, **characterized in that** a plurality of catalyst elements are provided in the housing (2), wherein catalyst elements with opposite curvatures are alternately placed adjacent to each other and form channels (6, 7) which alternately have narrowing and a widening flow cross-sections.

4. The recombiner according to one of Claims 1 through 3, **characterized in that** the base element (3), in the area of entry (3a) of the recombiner, is shaped with an integral surface and that the openings (5) are only provided in the section of the catalyst element that is located downstream from the area of entry (3a).

5. The recombiner according to one of Claims 1 through 4, **characterized in that** the base element (3) has at least one turbulator in the area of the catalyst material (3b).

6. The recombiner according to Claim 5, **characterized in that** the turbulator is provided in the form of a boundary layer fence whose orientation runs essentially transversal to the direction of overflow.

7. The recombiner according to Claim 5, **characterized in that** the turbulator is provided in the form of a surface roughness.

## Revendications

1. Dispositif de recombinaison destiné à éliminer l'hydrogène, comprenant
- un carter (2) et
- au moins un élément catalytique agencé dans le carter (2), qui est formé par un corps de base plat (3), qui est revêtu au moins en partie d'un matériau catalytique (3b),
- le corps de base (3) comportant au moins une perforation (5) dans la zone du matériau catalytique (3b),
**caractérisé**
- **en ce que** le corps de base (3) de l'élément catalytique est cintré,
- **en ce que**, à l'intérieur du carter (2), au moins deux canaux (6, 7) sont réalisés par le corps de base (3),
- sachant que dans la zone revêtue au moins un premier canal (6) comporte une section de passage se rétrécissant et au moins un deuxième canal (7) comporte une section de passage s'élargissant.

2. Dispositif de recombinaison selon la revendication 1, **caractérisé en ce que** le premier canal (6) comporte une section de passage se rétrécissant dans le sens du flux dans la zone d'admission et une section de passage s'élargissant dans la zone en aval de celle-ci, et **en ce que** le deuxième canal (7) comporte une section de passage s'élargissant dans le sens du flux dans la zone d'admission et une section de passage se rétrécissant dans la zone en aval de celle-ci.

3. Dispositif de recombinaison selon la revendication 2, **caractérisé en ce qu'**une pluralité d'éléments catalytiques sont disposés dans le carter (2), les éléments catalytiques étant les uns à côté des autres agencés en alternance avec les surfaces cintrées orientées dans le sens opposé et formant des canaux (6, 7) qui comportent en alternance une section de passage se rétrécissant et une section de passage s'élargissant.

4. Dispositif de recombinaison selon l'une quelconque des revendications 1 à 3, **caractérisé en ce que** le corps de base (3) est plat dans la zone d'admission (3a) du dispositif de recombinaison et **en ce que** les perforations (5) sont réalisées uniquement dans la zone de l'élément catalytique disposée en aval de la zone d'admission (3a).

5. Dispositif de recombinaison selon l'une quelconque des revendications 1 à 4, **caractérisé en ce que** le corps de base (3) comporte au moins un générateur de turbulence dans la zone du matériau catalytique (3b).

6. Dispositif de recombinaison selon la revendication 5, **caractérisé en ce que** le générateur de turbulence est conçu sous la forme d'une délimitation d'interface, qui est orientée sensiblement transversalement à la direction de passage.

7. Dispositif de recombinaison selon la revendication 5, **caractérisé en ce que** le générateur de turbulence est conçu sous la forme d'une rugosité de surface.
